# EUROPEAN PATENT SPECIFICATION

(11) **EP 2 788 192 B1**
(45) Date of publication and mention of the grant of the patent: **13.06.2018**
(21) Application number: 12855815.2
(22) Date of filing: 28.11.2012
(51) Int. Cl.: B32B 37/06, B32B 27/36, B32B 23/08, B32B 5/18

(54) **METHODS OF BONDING POLYESTER SUBSTRATES**
VERFAHREN ZUM BINDEN VON POLYESTERSUBSTRATEN
PROCÉDÉS DE LIAISON DE SUBSTRATS DE POLYESTER

(30) Priority: 06.12.2011 US 201161567492 P
(43) Date of publication of application: 15.10.2014
(73) Proprietor: 3M Innovative Properties Company, St. Paul, MN 55133-3427 (US)
(72) Inventor: GETSCHEL, Joel A., Saint Paul, Minnesota 55133-3427 (US); STROBEL, Mark A., Saint Paul, Minnesota 55133-3427 (US); SCHMID, Matthew J., Saint Paul, Minnesota 55133-3427 (US); KALISH, Jeffrey P., Saint Paul, Minnesota 55133-3427 (US); JONZA, James M., Saint Paul, Minnesota 55133-3427 (US); GUNES, Ibrahim S., Saint Paul, Minnesota 55133-3427 (US); FANSLER, Duane D., Saint Paul, Minnesota 55133-3427 (US)
(74) Representative: Herzog, Fiesser & Partner Patentanwälte PartG mbB
(86) International application number: PCT/US2012/066844
(87) International publication number: WO 2013/085773

(56) References cited:
- WO-A2-2011/112447
- US-A- 4 198 458
- US-A- 4 681 648
- US-A- 4 871 406
- US-A- 5 789 065
- US-A1- 2008 254 307

## Description

### Background

Substrates are often bonded to each other to form laminates, for various purposes.

US Patent Application Publication 2008/0254307 discloses apparatuses and methods for bonding together two or more layers or oriented polymer material or secondary material to form a rigid member. In one aspect, at least one of the layers of material is oriented semi-crystalline thermoplastic, such as polyethylene terephthalate.

### Summary

Herein are disclosed methods of bonding polyester substrates together, comprising externally delivering thermal energy onto the bonding surfaces of the substrates and bringing the bonding surfaces into proximity with each other and bonding the substrates to each other.

Thus in one aspect, herein is disclosed a method comprising: externally delivering thermal energy onto a first major bonding surface of a first moving polyester substrate so that the first major bonding surface of the first moving substrate is a heated surface; externally delivering thermal energy onto a first major bonding surface of a second moving polyester substrate so that the first major bonding surface of the second moving substrate is a heated surface; bringing the heated first major bonding surface of the first polyester substrate into proximity to the heated first major bonding surface of the second polyester substrate; and, self-bonding the first polyester substrate and the second polyester substrate to each other to form a polyester laminate.

These and other aspects of the invention will be apparent from the detailed description below. In no event, however, should the above summaries be construed as limitations on the claimable subject matter, whether such subject matter is presented in claims in the application as initially filed or in claims that are amended or otherwise presented in prosecution.

### Brief Description of the Drawings

Fig. 1 is a side cross sectional view of an exemplary polyester laminate and an exemplary process and apparatus for making.
Fig. 2 is a side cross sectional view of another exemplary polyester laminate and an exemplary process and apparatus for making.
Fig. 3 is a side cross sectional view of an exemplary polyester laminate.
Fig. 4 is a side cross sectional view of an exemplary polyester laminate.
Fig. 5 is a side cross sectional view of an exemplary polyester laminate.
Fig. 6 is a side cross sectional view of an exemplary polyester laminate.
Fig. 7 is a side cross sectional view of an exemplary polyester laminate.
Fig. 8 is a side cross sectional view of an exemplary polyester laminate.
Fig. 9 is a side cross sectional view of an exemplary polyester laminate.
Fig. 10 is a side cross sectional view of an exemplary polyester laminate.
Fig. 11 is a perspective side view photograph of an exemplary thermoformed polyester laminate.

Like reference numbers in the various figures indicate like elements. Some elements may be present in identical or equivalent multiples; in such cases only one or more representative elements may be designated by a reference number but it will be understood that such reference numbers apply to all such identical elements. Unless otherwise indicated, all figures and drawings in this document are not to scale and are chosen for the purpose of illustrating different embodiments of the invention. In particular the dimensions of the various components are depicted in illustrative terms only, and no relationship between the dimensions of the various components should be inferred from the drawings, unless so indicated. Although terms such as "top", bottom", "upper", lower", "under", "over", "front", "back", "outward", "inward", "up" and "down", and "first" and "second" may be used in this disclosure, it should be understood that those terms are used in their relative sense only unless otherwise noted.

### Detailed Description

### Glossary

By "polyester substrate" is meant any sheet-like polyester material, whether such substrate comprises a single layer of polyester material (e.g., of polyester film or cellular polyester material), or is a polyester laminate.

By "polyester laminate" is meant a multilayer structure comprising at least two layers of polyester material (e.g., polyester films and/or cellular polyester materials) that are bonded to each other.

By "cellular laminate" is meant a polyester laminate comprising at least two cellular polyester layers that are bonded to each other.

By "film laminate" is meant a polyester laminate comprising at least two polyester films that are bonded to each other.

By "cellular/film laminate" is meant a polyester laminate comprising a cellular polyester layer or a cellular laminate, and a polyester film or film laminate that is bonded to a major side of the cellular polyester layer or cellular laminate.

By "film/cellular/film laminate" is meant a polyester laminate comprising a cellular polyester layer or a cellular laminate, and a first polyester film or film laminate that is bonded to a first major side of the cellular polyester layer or cellular laminate, and a second polyester film or film laminate that is bonded to a second major side of the cellular polyester layer or cellular laminate.

By "subassembly" is meant a collection of components (e.g., a laminate) that may be further bonded to one or more additional substrates (whether a single layer or a laminate) so as to form another subassembly or an article (e.g., a finished good).

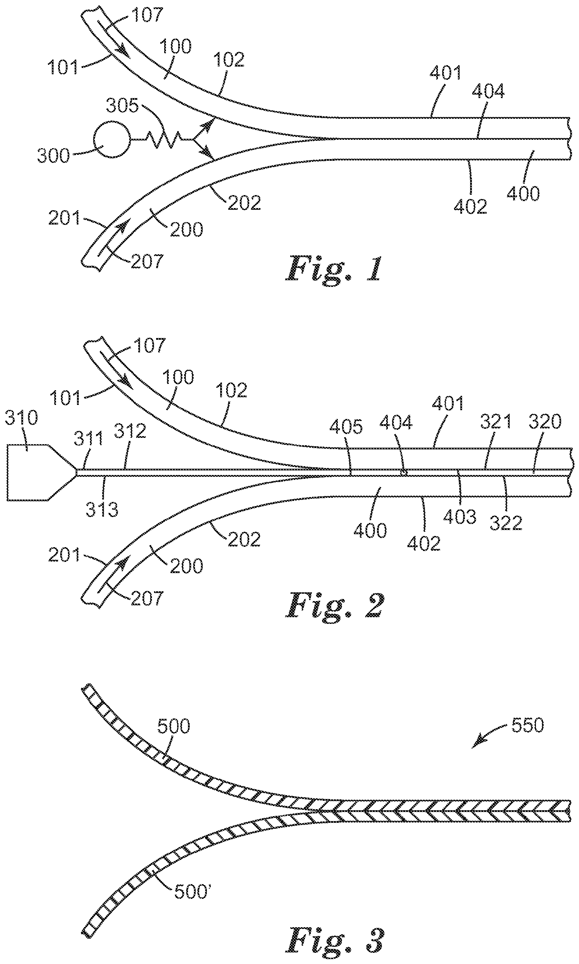

Disclosed herein, and presented in exemplary illustration in Figs. 1 and 2, are methods for bonding polyester substrates together. In some embodiments, the methods involve self-bonding. By "self-bonding" and "self-bonded" is meant bonding between adjacent polyester substrates (e.g., with reference to Fig. 1, between first major surface 101 of first polyester substrate 100, and first major surface 201 of second polyester substrate 200) of like composition, the bonding being achieved without the use of any adhesive or fastener that is of unlike composition from the adjacent polyester substrates. Such self-bonding thus excludes the presence, at the bonding interface between the adjacent materials, of any kind of adhesive such as e.g. pressure-sensitive adhesives, glues, hot-melt adhesives, UV-curable adhesives, etc. Such self-bonding also excludes the use of any type of mechanical fastener as a necessary or essential aid to bonding the adjacent materials together.

By polyester materials "of like composition" is meant materials that comprise compositions similar enough to each other that the materials exhibit melting points within 25 degrees C of each other. It is further meant that the materials comprise polymer chains that are similar enough in molecular composition that chains from the adjacent materials can entangle with each other when brought near or to their melting points, sufficient to produce an acceptable melt-bond between the materials (when the materials are cooled). In specific embodiments, the materials of like composition may exhibit melting points that are within 10 degrees C, or 3 degrees C, of each other. (It will be recognized that such parameters will comprise the usual level of uncertainty inherent in measuring melting points by customary methods such as Differential Scanning Calorimetry and the like). Above and beyond the above-presented general definition of polymeric materials of like composition, polyesters that comprise at least 90 % by weight of the same monomer units (e.g., in which 90 wt. % of each polyester material is made from reacting of the same acid(s)/ester(s), with the same chain extender(s)) are of like composition as considered herein.

In some embodiments, as exemplified e.g. by Fig. 1, between a first polyester substrate and a second polyester substrate may take the form of direct melt-bonding between a major surface of the first polyester substrate and a major surface of the second polyester substrate. By "direct melt-bonding" and "directly melt-bonded" is meant placing such surfaces (e.g., with reference to Fig. 1, surfaces 101 and 201 of first and second polyester substrates 100 and 200, respectively) in direct contact with each other so that polymer chains from the two materials entangle, with the result that as the materials are cooled and solidified an acceptably strong bond is formed therebetween. If such bonding comprises self-bonding, it may have the result that the polymeric materials may be of like, or even identical, composition throughout the bonding zone (again with reference to Fig. 1, as exemplified by bonding zone 404 extending from bonding surface 101 of first polyester substrate 100 to bonding surface 201 of second polyester substrate 200). With further reference to Fig. 1, a product 400 of such a bonding operation is termed a "polyester laminate". As shown in Fig. 1, such a direct melt-bonding process may comprise bringing together first polyester substrate 100, with first major (bonding) surface 101 (and with second, oppositely-facing surface 102), and second polyester substrate 200, with first major (bonding) surface 201 (and with second, oppositely-facing surface 102), so that bonding surfaces 101 and 102 are contacted with each other while in a heated state. The thus-formed polyester laminate 400 may comprise first and second oppositely-facing major surfaces 401 and 402 (formed by major second surfaces 102 and 202 of substrates 100 and 200 respectively). In some embodiments, the thus-formed polyester laminate may be a subassembly (rather than e.g. a finished article), thus the polyester laminate may itself then be bonded to another polyester substrate (which itself may be a single layer, or a laminate), e.g. by way of bonding surface 401 and/or surface 402 to such an additional substrate.

In other embodiments, exemplified e.g. by Fig. 2, bonding between first and second polyester substrates may take the form of indirect melt-bonding between a major surface of the first substrate and a major surface of the second substrate. By "indirect melt-bonding" and "indirectly melt-bonded" is meant providing a layer of molten polymeric material of like composition to that of both the first and second polyester substrates, in between adjacent and oppositely-facing major surfaces of the first and second substrates, so that some polymer chains of the molten polymeric material entangle with polymer chains of the first substrate, and some polymer chains of the molten polymeric layer entangle with polymer chains of the second substrate, so that the molten polymeric material (when cooled and solidified) bonds the first and second substrates together. With reference to Fig. 2, molten extrudate 312 may be extruded from extruder 310 so that major surface 311 of molten extrudate 312 contacts first major surface 101 of first polyester substrate 100, and major surface 313 of molten extrudate 312 contacts first major surface 201 of second polyester substrate 100, so as to form polyester laminate 400. Such a molten polymeric material of like composition, when solidified, forms a tie layer (e.g., layer 320 of Fig. 2) of like composition to the first and second polyester substrates and as such is distinguished from adhesives, heat-seal layers, etc., of unlike composition from the first and second polyester substrates. If such bonding comprises self-bonding, it may have the result that the polymeric materials may be of like, or even identical, composition throughout the bonding zone (e.g., bonding zone 404 of Fig. 2, extending from bonding surface 403 of first polyester substrate 100, through bonding surface 321 of tie layer 320, through tie layer 320, through bonding surface 322 of tie layer 320, and to bonding surface 405 of second polyester substrate 200).

Thus in various embodiments, first and second polyester substrates may be directly melt-bonded together (as shown in exemplary illustration in Fig. 1), or may be indirectly melt-bonded together (as shown in exemplary illustration in Fig. 2), to form a polyester laminate.

As referenced above, by "melt-bonding" is meant bonding that is achieved by imparting thermal energy to adjacent polymeric materials (e.g., to at least the adjacent surfaces of such materials) of like composition, so as to raise at least the adjacent surfaces of the materials to a sufficiently high temperature (e.g., above their softening point; often, to or near their melting point) to allow entanglement to occur between polymer chains of the adjacent polymeric materials such that upon subsequent cooling of the materials, the adjacent polymeric materials are acceptably bonded together without the use of any auxiliary adhesives, fasteners, etc. that are of unlike composition from that of the melt-bonded polymeric materials. In such melt-bonding, covalent bonds between polymeric chains of the adjacent polymeric materials may not be necessarily required; rather, they may be sufficiently held together by a combination of e.g. physical entanglement, polar interactions, electron sharing, acid-base interactions, hydrogen bonding, Van der Waals forces, and so on.

In some embodiments, the methods of bonding (i.e., melt-bonding, e.g. self-bonding) that are disclosed herein may involve surface-bonding. By "surface-bonding" is meant melt-bonding that is achieved by externally delivering thermal energy onto a first major bonding surface of a first moving substrate so that the first major bonding surface of the first moving substrate is a heated surface; externally delivering thermal energy onto a first major bonding surface of a second moving substrate so that the first major bonding surface of the second moving substrate is a heated surface; bringing the heated first major bonding surface of the first substrate into proximity to the heated first major bonding surface of the second substrate; and, bonding the surfaces of the first and second substrates to each other by any of the melt-bonding (e.g., self-bonding) methods described herein. By "externally delivering" thermal energy is meant delivering energy to a bonding surface of a substrate along a path that does not involve conducting the thermal energy through the thickness of the substrate. Such surface-bonding is thus distinguished from e.g. bonding in which thermal energy is delivered from the backside of the substrate (the side opposite the surface to be bonded), through the thickness of a substrate, to the bonding surface of the substrate. By a "moving substrate" is meant a substrate that is continuously moving generally along a long axis (e.g., machine direction) of the substrate, e.g. as occurs in the handling of substrates in conventional web-handling equipment. (Direction of motion of exemplary substrates 100 and 200 are respectively indicated by arrows 107 and 207 of Fig. 1.)

With reference to the exemplary illustration of Fig. 1, the disclosed surface-bonding may comprise using at least one thermal energy source (shown in Fig. 1 in generic representation as element 300) to externally deliver thermal energy (shown in Fig. 1 in generic representation as element 305) onto first major surface 101 of first substrate 100, and to externally deliver thermal energy onto first major surface 201 of second substrate 200 (a single thermal energy source can be used to deliver thermal energy onto both surfaces/substrates; or separate sources can be used for each substrate). Surfaces 101 and 201 will then be heated substrates, and can then be brought into contact with each other while in a heated state, such that direct melt-bonding can take place.

Such surface-bonding so as to achieve direct melt-bonding of substrates to each other may be achieved e.g. by any suitable method of externally delivering thermal energy onto a bonding surface of at least one of the substrates to be bonded. In various embodiments, such methods might include impinging flame on one or both bonding surfaces, or impinging electromagnetic radiation (such as e.g. infrared radiation, e.g. guided by a parabolic reflector) on one or both bonding surfaces, as evidenced in the Examples herein. In further embodiments, such methods might include impinging heated gaseous fluid (e.g., hot air) on one or both of the bonding surfaces, optionally with local removal of the impinged heated fluid. Such methods of using impinged heated fluid to surface-bond substrates together are discussed in U.S. Patent Application Publication No. 2011/0151171, entitled Bonded Substrates and Methods for Bonding Substrates; and, U.S. Patent Application Publication 2011/0147475, entitled Apparatus and Methods for Impinging Fluids on Substrates. In some embodiments such surface-bonding (however achieved) may be augmented or assisted by delivering thermal energy through the thickness of a substrate to be bonded, e.g. by passing the substrate over a heated backing roll, e.g. a nip roll, either prior to, during, or after the external delivering of thermal energy onto the bonding surface of the substrate. In other embodiments no delivery of thermal energy through the thickness of the substrate may occur. In various particular embodiments of this type, such a backing roll may not be actively heated or cooled; or, the backing roll may be actively temperature-controlled to a lower temperature than that of the substrate. In the latter case the backing roll may be controlled to a temperature such that no thermal energy is transferred into the bulk thickness of the substrate; or is may be controlled to a temperature such that thermal energy is removed from the bulk thickness of the substrate. In some embodiments, external delivery of thermal energy may be used to preheat at least the bonding surface of the substrate. For example, unfocused infrared radiation (as provided e.g. by a conventional IR lamp) may be directed onto the substrate. The substrate (along with the other substrate, to which it will be bonded) may then be bonded by any of the methods disclosed herein, e.g. by surface-bonding.

It will be appreciated that the above-described surface-bonding involves direct melt-bonding in which heated surfaces of substrate to be bonded together are brought into direct contact with each other. In other embodiments, surface-bonding may be performed which involves indirect melt-bonding, such that substrates are bonded together by way of a tie layer of like composition to the substrates. As discussed previously herein, such bonding may be performed by providing a layer of molten polymeric material of like composition to that of the substrates to be bonded, in between adjacent, oppositely-facing major surfaces of the substrates to be bonded. This may be achieved for example by extruding a molten thermoplastic polymer layer in between the surfaces to be bonded. It will be noted that such methods involve delivering thermal energy to the bonding surfaces of the substrates through a path that does not involve conducting the thermal energy through the thickness of the substrates. (In this case, thermal energy is carried by the molten extruded polymer material, and is transmitted therefrom to the bonding surface of each substrate when the molten material contacts each bonding surface). Thus, the extruding of a molten layer of polymer of like composition between bonding surfaces of substrates to be bonded, falls within the above definition of surface-bonding.

Thus, with reference to Fig. 2, molten extrudate 312 may be extruded from extruder 310 so that major surface 311 of extrudate 312 contacts first major surface 101 of first polyester substrate 100, and major surface 313 of extrudate 312 contacts first major surface 201 of second polyester substrate 200, so as to form polyester laminate 400. Upon cooling and solidification of tie layer 320 and of bonding surface 403 and 405 of the first and second substrates, respectively, a melt-bond (e.g., self-bond) may be formed between the first and second substrates.

In various embodiments, tie layers as may be provided as described above may comprise a thickness of from about 12-200 microns, about 25-125 microns, or about 50-100 microns. Such tie layers may be comprised of polyester as discussed earlier herein. The above-presented definitions of the term "polyester", and various embodiments directed to polyester compositions, while not repeated here, are specifically applicable to the polyester material of the tie layer. It will be appreciated, however, that such tie layers, not having gone through an orientation process, may not necessarily comprise orientation of the type that may be exhibited by certain oriented polyester film substrates.

By "polyester" is meant any material in which at least about 70 % by weight of the material is a homopolymer and/or copolymer (e.g., synthetic homopolymer or copolymer) having ester linkages, as may be formed e.g. by condensation polymerization methods. Suitable polyesters include e.g. those commonly made by condensation polymerization of hydroxyl-containing monomers and/or oligomers (e.g., chain extenders such as glycols and the like) with poly-acid-containing or poly-ester-containing monomers and/or oligomers (e.g., dicarboxylic acids or diesters such as terephthalic acid, naphthalene dicarboxylate, etc.). It should be noted that such polyesters may be made from poly-acids, or from any ester-forming equivalents of such materials (e.g., from any materials that can be polymerized to ultimately provide a polyester). Such polyesters also include those that may be industrially synthesized via bacterial fermentation, by ring-opening polymerization, cyclization, and so on. Recycled polyesters may also be used, e.g. alone or in combination with non-recycled polyesters.

Such polyesters may be made from any suitable hydroxyl-containing chain extender or combination of extenders. Commonly used chain extenders include for example the two-carbon diol, ethylene glycol (2G, when polymerized with terephthalic acids or esters yielding polyester "2GT"); the three-carbon diol, 1,3 propanediol (3G, when polymerized with terephthalic acids or esters yielding polyester "3GT"); and the four-carbon diol 1,4 butanediol (4G, when polymerized with terephthalic acids or esters yielding polyester "4GT"). Other names in use for 2GT are polyethylene terephthalate or PET, for 3GT are trimethylene terephthalate (PTT) or polypropylene terephthalate (PPT) and for 4GT polybutylene terephthalate or PBT. Polyesters as disclosed herein are not limited in the number of carbons (n) in the glycol monomer, as 6, 8, 10, 12, 18 as well as polymeric glycols (with e.g. 20 < n <20,000, as exemplified by e.g. polyethylene glycol) are also well-known.

Such polyesters may be made from any suitable poly-acid-containing or poly-ester-containing monomers or oligomers or combination thereof. In some embodiments, such monomers or oligomers may be selected such that the resulting polyester is an aromatic polyester, as exemplified by e.g. poly(nG terephthalates), poly(nG isophthalates), poly(nG naphthalates), where n denotes the number of carbons in the glycol) and copolymers and/or blends thereof. In other embodiments, such monomers or oligomers may be selected such that the resulting polyester is an aliphatic polyester, as exemplified by polycaprolactone, poly(lactic acid), polyhydroxy alcanoates, polycyclohydroxy alcanoates and the like. Blends of any of the above polyesters (e.g., aliphatic with aromatic) may be used, as can aliphatic/aromatic copolymers such as poly-nG-adipate terephthalate, poly-nG-succinate terephthalate, poly-nG-sebacate terephthalate and other aliphatic/ aromatic copolyesters Aliphatic cyclic glycols or cyclic acids/esters may also be used with either aliphatic or aromatic glycols and diacids or diesters. Examples include cyclohexane diols, cyclohexane dimethanols, benzene dimethanols, bisphenol A, cyclohexane dicarboxylic acids, norbornene dicarboxylic acids, biphenyl dicarboxylic acids and the like.

Some tri and tetra functional acids/esters or polyols may also be incorporated e.g. in amounts sufficient to increase chain branching, but low enough to avoid gelation. Useful examples include e.g. trimellitic acids, esters or anhydrides, trimethylol propane, pentaerythritol, epoxides, and epoxide functionalized acrylates.

Fully aromatic polyesters may be particularly useful e.g. if extreme temperature resistance is desired; examples of such materials include e.g. poly(BPA-terephthalate) and poly(4-hydroxy benzoate). Liquid crystalline polyesters (LCPs) may be useful (for a skin layer and/or a core layer). LCPs exhibit high modulus, low coefficient of thermal expansion, good hygroscopic and chemical stability, and inherent flame retardancy. Commercially available LCPs based on e.g. p-hydroxy benzoic acid, such as the product available from Ticona Engineering Polymers under the trade designation Vectra, are examples of suitable LCPs. In some embodiments, the polyesters may comprise fluorene moieties, as achieved e.g. by including reactants such as 9,9'-dihexylfluorene-2,7-dicarboxylic acid or 9,9-bis dihydroxy phenyl diol in the synthesizing of the polyester.

As mentioned above, the term "polyester" denotes that ester-linkage polymer chains make up at least about 70 % by weight of the material (e.g., of a polyester substrate). The remaining 30 % may comprise any other ingredient(s) as used for any desired purpose. For example, other polymeric materials may be blended with the polyester for various purposes (e.g., for impact modification or the like). Or, inorganic additives such as mineral fillers, reinforcing fillers, pigments or the like may be used (e.g., talc, silica, clay, titania, glass fibers, glass bubbles, and so on). Other additives might include antioxidants, ultraviolet absorbers, chain extenders, anti-static agents, hindered amine light stabilizers, hydrolytic stabilizers, nucleating agents, mold releases, processing aids, flame retardants, coloring agents, slip agents, and so on. Any of these additives may be used in any desired combination. In some embodiments, one or more non-polyester polymers (such as e.g. polycarbonate) may be present as a blend with the polyester, e.g. at up to 5, 10, 20, or 30 % by weight of the material. In other embodiments, non-polyester polymers may be limited to less than 5, 2, 1, or 0.5 % by weight of the material.

In further embodiments, ester-linkage polymer chains make up at least about 80 %, at least about 90 %, at least about 95 %, at least about 98 %, or at least 99.5 % of the weight of the material.

In various embodiments, the polyester is at least 70 % by weight poly(ethylene terephthalate), at least 80 % by weight poly(ethylene terephthalate), at least 90 % by weight poly(ethylene terephthalate), or at least 95 % by weight poly(ethylene terephthalate). In further embodiments, the polyester material consists essentially of poly(ethylene terephthalate), which condition will be understood as not precluding the presence of a small amount (e.g., less than about 2.0 mole %) of monomeric units derived from glycols other than ethylene glycol. For example, those of ordinary skill will appreciate that a small amount (e.g., about 1.5% or less) of diethylene glycol, triethylene glycol or the like may sometimes be substituted for ethylene glycol in the production of poly (ethylene terephthalate), in order to enhance the ability of the product to be e.g. biaxially-oriented. In some embodiments, ionic comonomers may be included e.g. to suppress crystallization in the cast sheet, enabling biaxial orientation so as to provide low haze, flat, birefringent and strong polyester films, as discussed in further detail in U.S. Patent Application Publication 2011/0051040 U.S. 6,875,803 and US 6,794,432 are two other references to thermoformable polyester compositions.

In specific embodiments, the above-mentioned polymeric materials of like composition are materials in which at least 90 % by weight of the polymeric material is poly(ethylene terephthalate). In further embodiments, such materials are those in which at least 97 % by weight of the material is poly(ethylene terephthalate). In still further embodiments, such materials consist essentially of poly(ethylene terephthalate). It will be appreciated that the melting temperature of commonly available poly(ethylene terephthalate) is typically in the range of 250 - 260 degrees C; often, about 256 degree C.

In some embodiments a polyester substrate may be thermoformable, meaning that it is made of a thermoplastic material that can be heated to a softening temperature at or above which it can be formed to a shape, and can then be cooled to maintain the structure in the formed shape. As such, a thermoformable polyester substrate is differentiated from non-thermoformable materials (irrespective of their composition). In particular, such a thermoformable material is distinguished from thermoset materials that comprise such a number of permanent crosslinks that they cannot be satisfactorily thermoformed. A polyester substrate may be recyclable. By this is meant that the substrate is sufficiently free of non-polyester materials so as to allow it to be recycled using conventional polyester-recycling methods. Those of skill in the art will appreciate that an oft-used procedure in the recycling of polyester articles involves melting the polyester articles so that other materials (e.g., from other plastic articles made of materials with different melting points and/or densities, etc.), can be separated therefrom. As such, a recyclable polyester substrate will not contain an unacceptably high percentage of materials that might decompose or degrade at such melt-processing temperatures so as to release byproducts or the like that could serve to adversely impact the recycled polyester (that is, that might cause unacceptable discoloration, loss in molecular weight and/or physical properties, etc.).

Often, such recyclable polyester substrates are recycled into polyester flakes, in which form they can be used (whether alone or in combination with some amount of virgin polyester) to make melt-processed articles, such as e.g. injection-molded or blow-molded articles, films, fibers, etc. In some instances, recyclable polyester substrates may be chemically broken down into constituent monomers or the like, and can subsequently be used to synthesize polymeric materials. It may be envisaged that the recyclable polyester substrate is comprised of at least about 95 wt. % poly(ethylene terephthalate). In further embodiments, the recyclable substrate is comprised of at least about 98 wt. % poly(ethylene terephthalate). In still further embodiments, the recyclable substrate consists essentially of poly(ethylene terephthalate). The polyester substrate may comprise recycled polyester content. In this context, recycled polyester means polyester that has gone through a melt-recycling process and/or has been chemically broken down and repolymerized to polyester, as described above. In specific embodiments, the polyester substrate may comprise at least 20, 40, or 80 % by weight, recycled polyester content. A polyester substrate to be bonded (e.g., exemplary substrate 100 and/or 200) may be a polyester film substrate that comprises at least one oriented polyester film. By "oriented" polyester film is meant polyester film that has been subjected at least to a uniaxial orienting process optionally followed by heat-setting (e.g., annealing at a temperature within about 50 degrees C of the melting point of the polyester material), such that the polyester film exhibits at least one in-plane axis (e.g., along an oriented, e.g. downweb, direction of the film) with an elastic modulus of at least about 3 GPa (435 ksi) and a tensile strength of at least about 170 MPa (25 ksi). In some embodiments, the oriented polyester film is a biaxially-oriented polyester film, with an elastic modulus along two in-plane orthogonal axes (e.g., downweb and crossweb) of at least about 3 GPa (435 ksi) and a tensile strength along those axes of at least about 170 MPa (25 ksi). Further, the biaxially-oriented polyester film may have an elastic modulus along two orthogonal in-plane axes of at least about 3.5 GPa (510 ksi), at least about 4.0 GPa (580 ksi), or at least about 4.5 GPa (650 ksi). In additional embodiments, the biaxially-oriented polyester film may have a tensile strength along two orthogonal in-plane axes of at least about 200 MPa (29 ksi) or of at least about 230 MPa (33 ksi) Additionally the biaxially-oriented polyester film may comprise a % crystallinity of at least about 10, 20, 30, 40, or 50 % (as measured by Differential Scanning Calorimetry methods in which 100% crystallinity would correspond to a heat of fusion of approximately 140 J/g).

As used herein, the term polyester film substrate encompasses a single layer of polyester film, and a laminate comprising at least two layers of polyester film. Such a polyester film substrate may comprise any suitable oriented polyester film or films. Sometimes, a polyester film substrate may be a dense polyester film that is substantially free of porosity, cellular structures, and the like. In specific embodiments, a polyester film substrate may comprise a density of at least about 1.2, or 1.3, grams per cubic centimeter. In further embodiments, the polyester film substrate may exhibit a density of at most about 1.40 grams per cc. Upon circumstances, the polyester film substrate may be substantially free of reinforcing fibers (e.g., mineral fibers, glass fibers or the like). In further embodiments, the polyester film substrate may be substantially free of fibers of any type or composition. (Those of ordinary skill will appreciate that as used here and in other contexts herein, the term substantially free does not preclude the presence of some extremely low, e.g. 0.1% or less, amount of material, as may occur e.g. when using large scale production equipment and the like). A polyester film substrate may comprise a microvoided polyester film, as described e.g. in U.S. Patent 5,811,493. In some embodiments, a polyester film substrate may comprise a tear-resistant polyester film, as described e.g. in U.S. Patent 6,040,061.

The earlier-presented definitions of the term "polyester", and various embodiments directed to polyester compositions, while not repeated here, are specifically applicable to the polyester material of polyester film substrates disclosed herein (whether as individual films, or as film laminates). Sometimes A polyester film substrate (e.g., film, film laminate, etc.) may be at least may be at least 10 microns in thickness (along the shortest dimension of the substrate, e.g. between major surfaces thereof (with reference to exemplary polyester substrate 100 of Fig. 1, between surfaces 101 and 102). In further embodiments, a skin layer may be at least 50, 100, 200, 400, or even 600 microns in thickness. In various embodiments, a polyester film may comprise a coefficient of thermal expansion of at most about 35, 30, or 25 parts per million per degree C, measured, in a temperature range of approximately +20 to +60 degrees C, e.g. by the methods described in the examples, a polyester film is a thermoplastic material (as may be distinguished from e.g. thermoset materials). Sometimes the polyester film may be thermoformable. Sometimes, a polyester film substrate may be at most 10, 5, or 2 mm (millimeters) in thickness.

Exemplary first polyester substrate 100 and exemplary second polyester substrate 200, if either or both are polyester film substrates, may share any of the above-discussed properties. First polyester film substrate 100 may be identical, similar, or different, from second polyester film substrate 200, e.g. in thickness, physical properties, and the like. Biaxially-oriented polyester films that may suitably serve as polyester film substrates include e.g. those products available from DuPont Teijin Films, Chester, VA, under the trade names Mylar and Melinex, and those products available from Mitsubishi Polyester GMBH, Weisbaden, Germany, under the trade name Hostaphan. Again, such films may serve (as a substrate to be bonded) as a single layer, or as part of a multilayer laminate.

Any desired processing or treatment may be performed on a surface of a polyester substrate (e.g., film) and/or on a surface of a polyester film included or to be included in such a substrate. Such processing might be performed before, or after, the attachment of the film to e.g. a cellular layer, and/or before or after lamination of individual films to each other to form a film laminate (as described in detail later herein). Such processing might include e.g. plasma treatment, corona treatment, priming treatments, and the like, as appropriate for various purposes. A polyester substrate to be bonded (e.g., exemplary substrate 100 and/or 200) may comprise a cellular polyester substrate. By a "cellular polyester substrate" is meant a substrate that comprises a polyester matrix with cells (e.g., cavities, pores, openings, etc.) therein, such that the cellular substrate has an overall density (taking into account the cells) that is less than about 80% of the inherent density of the polyester matrix material itself (disregarding the cells). Such an overall density of a cellular substrate may be calculated e.g. by measuring the ratio of the weight of the sample, to the overall volume (as defined by the outer dimensions) of the sample. In further embodiments, the cellular polyester substrate comprises an overall density that is less than about 60%, less than about 40%, or less than about 30%, of the inherent density of the polyester matrix material itself. As used herein, the term cellular polyester substrate encompasses both a single layer of cellular polyester material, and laminates comprising at least two layers of cellular polyester material. A cellular polyester substrate may have an overall density of less than about 0.8, less than about 0.5, or less than about 0.2, grams / cubic centimeter. A cellular polyester substrate as defined herein specifically excludes fibrous polyester materials, such as nonwoven batts, fabrics, scrims and the like. In some embodiments, the cellular polyester substrate may be a generally incompressible substrate with a compressive modulus (Young's modulus in compression, as measured along the shortest dimension of the substrate at approximately 20 degrees C according to generally known methods) of at least 6.2 MPa (900 psi). Those of ordinary skill will appreciate that such a property will distinguish such an incompressible cellular substrate from e.g. flexible foams and the like, which may be e.g. easily and reversibly compressible (e.g., by hand), at room temperature. In further embodiments, the cellular polyester substrate may exhibit a compression modulus of at least about 20, 50, or 100 MPa.

The earlier-presented definitions of the term "polyester", and polyester compositions, while not repeated here, are specifically applicable to the polyester material of the cellular polyester substrate. (It is however noted that in the specific case of a cellular material, the compositional amounts, percentages, etc., mentioned in the previous discussions of polyester, are with reference only to the polyester (matrix) material itself, disregarding the empty or air-filled cavity spaces of the cellular substrate.) The cellular polyester substrate may comprise a polyester foam layer. In certain embodiments, the polyester foam is a conventional polyester foam (made e.g. by the extrusion of a polyester melt comprising a chemical blowing agent such as azodicarbonamide). (Physical blowing agents such as carbon dioxide, nitrogen, and/or other gases can also be injected into the molten polyester prior to exiting the extrusion die.) Such conventional polyester foams often comprise an average cell size in the range of e.g. 0.1 -1.0 mm. Otherwise the cellular polyester substrate is a microcellular polyester foam, meaning that it has an average cell size of less than 100 microns. Often, such materials may have an average cell size of 50 microns or less; in some cases, in the range of about 10 microns or less. Such a microcellular polyester foam may be obtained e.g. by saturating a polyester material under pressure with a physical blowing agent such as carbon dioxide and then exposing the polyester material to an elevated temperature so that the material foams with a very high nucleation density. Suitable microcellular foams are available e.g. from MicroGREEN, Arlington, WA, and are described in further detail in e.g. U.S. Patent 5,684,055.

A cellular polyester substrate (whether e.g. a conventional foam or a microcellular foam), may comprise open cells, closed cells, or a mixture thereof. The foam layer may be integrally skinned (i.e., such that it has a relatively densified layer at one or both surfaces thereof); or, it may have open cells present at one or both surfaces. At least some of the cells of the cellular polyester substrate may be filled with air, although in some instances some cells may contain some level of residual gases left over from the generating of the cells. In some embodiments, the term cellular polyester substrate as used herein excludes any cellular material in which the cells are impregnated with any type of non-polyester polymeric resin. In some embodiments the cellular polyester substrate may be thermoformable.

In various embodiments, a cellular polyester substrate (whether comprised of a single layer of cellular material, or a laminate comprising multiple cellular layers) may comprise a thickness (along the shortest dimension of the substrate) of at least 25 Further the cellular polyester substrate may comprise a thickness of at least 0.1 mm, 1 mm, 10 mm, or 100 mm. In additional embodiments, the cellular polyester substrate may comprise a thickness of at most 200 mm. A bonding surface (or surfaces) of a substrate to be bonded, may be an amorphous surface. A common approach known in the polyester film art is to coextrude an amorphous polyester layer onto one or both surfaces of e.g. a semicrystalline polyester film. Such amorphous polyesters are commonly known in the art, as exemplified by the materials commonly referred to as aPET or PETG. A sufficient fraction of comonomer content may be used so that upon orientation, the material may not crystallize (even if present as a layer upon a crystallizable polyester layer) but rather remains amorphous. Such amorphous layers are commonly extruded in the range of 25-140 microns, e.g. onto crystallizable polyester films, and may thin down following orientation of the multilayer film to the range of e.g. 1.5 to 10 microns in thickness. A bonding surface (or surfaces) of a substrate to be bonded may be a flashlamped surface. A flashlamped surface as defined herein is a polymer surface that has been suitably exposed to pulses of electromagnetic radiation (e.g., UV radiation) such that the surface of the polymer substrate, and a shallow layer therebeneath (often, extending no deeper than e.g. about 600 nanometers into the interior of the polymeric substrate) has been transformed (e.g. from a crystalline or semicrystalline state) into a quasi-amorphous state. It will be recognized that such a quasi-amorphous state differs from an amorphous state in having long-range ordering typical of crystalline structures and having short-range non-orientation or low orientation, as discussed in U.S. Patent 4,879,176. As such, a quasi-amorphous (flashlamped) polyester surface can be distinguished from a (conventional) amorphous polyester surface by various analytical methods, again as discussed in U.S. Patent 4,879,176. Further details of the flashlamping process and of flashlamped surfaces of polymeric substrates may be found in U.S. Patents 5,032,209; 4,879,176; and 4,822,451. herein.

Thus in reference to the exemplary illustrations of Figs. 1 and 2, any or all of surface 101 of first substrate 100, and surface 201 of second substrate 200, may be flashlamped surfaces. The flashlamping of a bonding surface of one or both substrates to be bonded, can be performed in-line with (e.g., upstream of, and immediately prior to) the bonding process (whether such bonding is by e.g. a tie layer, flame impingement, radiation impingement, heated fluid impingement, etc.).

Methods disclosed herein can be used to bond any suitable polyester substrate to any other suitable polyester substrate to form a polyester laminate. In some embodiments, such methods can be used to bond two polyester substrates together to form an assembly (e.g., a final product). In other embodiments, such methods can be used to bond substrates to each other to form a subassembly. Such a subassembly may itself then serve as a substrate that is input into a subsequent bonding process, so as to produce a subassembly comprising additional substrates, or an assembly (e.g., a final product). As illustrated in numerous exemplary embodiments below, such methods may be used to produce many possible subassemblies and assemblies.

A bonding process and the resulting laminate are shown in representative illustration in Fig. 3 (in this and in subsequent figures, no components are shown except the substrates to be bonded together, and the resulting polyester laminate). In Fig. 3, first and second polyester film substrates 500 and 500' (with, in this and in all subsequent figures, primes (') being used for convenience of description to denote, in a particular figure, two or more like components that may or may not be identical to each other) are bonded to each other to form film laminate 550. In the simplest exemplary case, first and second polyester film substrates 500 and 500' may each be a single layer of polyester film. Film laminate 550 may be an assembly that may be used as desired for whatever purpose or product; or, it may serve as a subassembly (substrate) that is input into a subsequent bonding process.

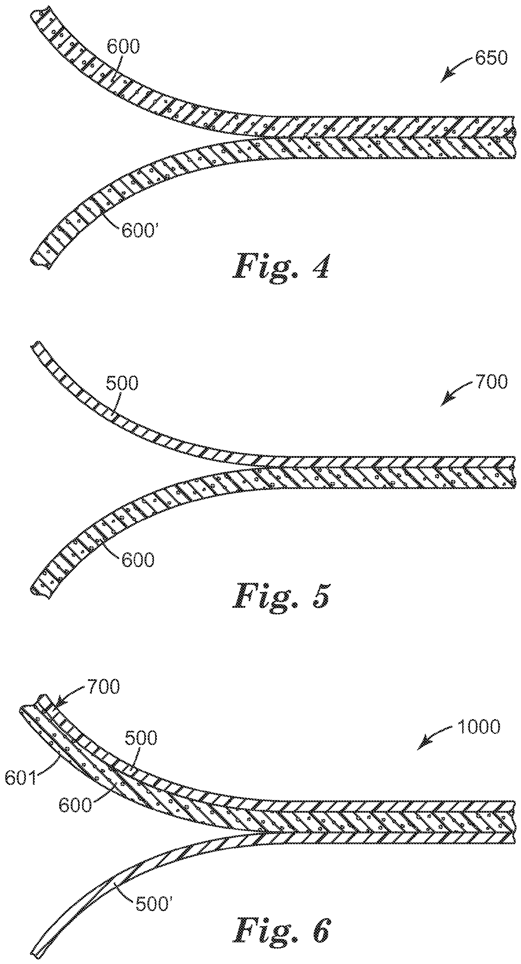

Another bonding process and the resulting laminate are shown in Fig. 4. In Fig. 4, first and second cellular polyester substrates 600 and 600' (which may each be e.g. a single layer of cellular polyester material) are bonded to each other to form cellular polyester laminate 650. Cellular laminate 650 may be an assembly that may be used as desired for whatever purpose or product; or, it may serve as a subassembly (substrate) that is input into a subsequent bonding process.

Another bonding process and the resulting laminate are shown in Fig. 5. In Fig. 5, polyester film substrate 500 and cellular polyester substrate 600 are bonded to each other to form film/cellular laminate 700. Film/cellular laminate 700 may be an assembly that may be used as desired for whatever purpose or product; or, it may serve as a subassembly (substrate) that is input into a subsequent bonding process.

Another bonding process and the resulting laminate are shown in Fig. 6. In Fig. 6, a first input substrate to be bonded is a film/cellular laminate 700, comprised of first polyester film substrate 500 and cellular substrate 600 that are bonded to each other (such an input substrate might e.g. be a product of the process shown in Fig. 5). A second input substrate to be bonded is a second polyester film substrate 500' (which, again, may be identical to, or different from, first polyester film substrate 500). Second polyester film substrate 500' is then bonded to exposed major surface 601 of cellular substrate 600 of film/cellular laminate 700. The result is the forming of a film/cellular/film laminate 1000 (previously defined herein as meaning a polyester laminate comprising a cellular polyester substrate or a cellular laminate, and a first polyester film substrate or film laminate that is bonded to a first major side of the cellular polyester substrate or cellular laminate, and a second polyester film substrate or film laminate that is bonded to a second major side of the cellular polyester substrate or cellular laminate). It will be recognized that laminate 1000 of Fig. 6 is a simple version of such a film/cellular/film laminate, involving only a single cellular substrate with a single film disposed on each major side thereof. Laminate 1000 may be an assembly that may be used as desired for whatever purpose or product; or, it may serve as a subassembly (substrate) that is input into a subsequent bonding process.

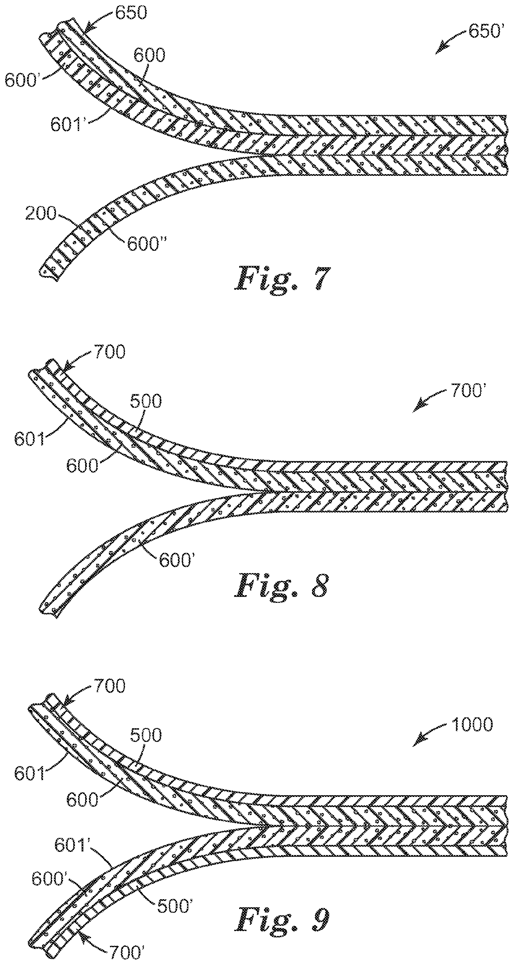

Another bonding process and the resulting laminate are shown in Fig. 7. In Fig. 7, a first input substrate to be bonded is a cellular laminate 650, comprised of first cellular substrate 600 and second cellular substrate 600' that are bonded to each other (such an input substrate might e.g. be a product of the process shown in Fig. 4). A second input substrate to be bonded is a third cellular substrate 600"(again, any of substrates 600, 600', and 600", may be identical to, or different from, each other). Third cellular substrate 600" is then bonded to exposed major surface 601' of cellular substrate 600' of cellular laminate 650. The result is the forming of a new cellular laminate 650' that contains an additional cellular substrate (layer), in comparison to cellular laminate 650. Laminate 650' may be an assembly that may be used as desired for whatever purpose or product; or, it may serve as a subassembly (substrate) that is input into a subsequent bonding process. It will be recognized that by the general method outlined in reference to Figs. 4 and 7, cellular laminates can be built up that comprise any desired number of cellular layers.

Still another bonding process and the resulting laminate are shown in Fig. 8. In Fig. 8, a first input substrate to be bonded is a film/cellular laminate 700, comprised of polyester film substrate 500 and first cellular substrate 600 that are surface bonded to each other (such an input substrate might e.g. be a product of the process shown in Fig. 5). A second input substrate to be bonded is second cellular substrate 600' (which, again, may be identical to, or different from, first cellular substrate 600). Second cellular substrate 600' is then bonded to exposed major surface 601 of cellular substrate 600 of film/cellular laminate 700. The result is the forming of a film/cellular laminate 700' with more cellular substrates therein, in comparison to film/cellular laminate 700. Laminate 700' may be an assembly that may be used as desired for whatever purpose or product; or, it may serve as a subassembly (substrate) that is input into a subsequent bonding process.

Still another bonding process and the resulting laminate are shown in Fig. 9. In Fig. 9, a first input substrate to be bonded is a film/cellular laminate 700, comprised of first polyester film substrate 500 and first cellular substrate 600 that are bonded to each other (such an input substrate might e.g. be a product of the process shown in Fig. 5). A second input substrate to be bonded is a second film/cellular laminate 700', comprised of second polyester film substrate 500' and second cellular substrate 600' that are bonded to each other (again, e.g. as shown in Fig. 5). Second film/cellular laminate substrate 700' and substrate components thereof, may be identical to, or different from, first film/cellular laminate 700 and substrate components thereof. Surfaces 601 and 601' of laminates 700 and 700' respectively, are then bonded together. The result is the forming of a film/cellular/film laminate 1000. Laminate 1000 may be an assembly that may be used as desired for whatever purpose or product; or, it may serve as a subassembly (substrate) that is input into a subsequent bonding process.

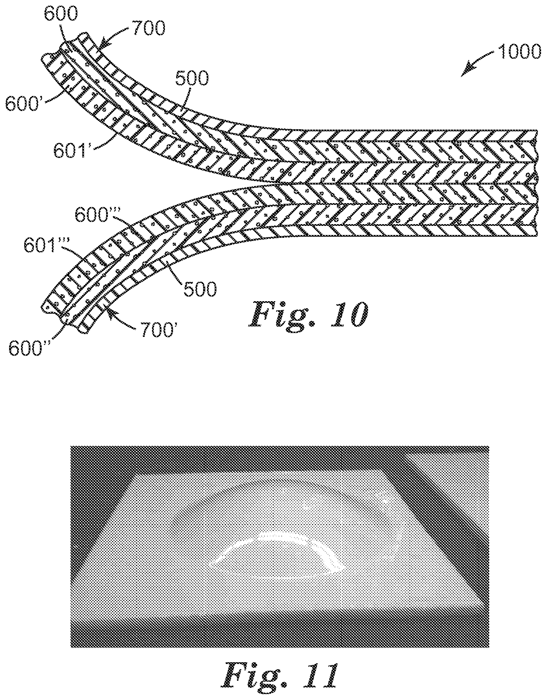

Yet another bonding process and the resulting laminate are shown in Fig. 10. In Fig. 10, a first input substrate to be bonded is a film/cellular laminate 700, comprised of first polyester film substrate 500 and first and second cellular substrates 600 and 600', that are bonded to each other (such an input substrate might e.g. be a product of the process shown in Fig. 8). A second input substrate to be bonded is a second film/cellular laminate 700', comprised of second polyester film substrate 500' and third and fourth cellular substrates 600" and 600"', that are bonded to each other. (Second film/cellular laminate substrate 700' and substrate components thereof, may be identical to, or different from, first film/cellular laminate 700 and components thereof). Surfaces 601' and 601'" of laminates 700 and 700' respectively, are then bonded together. The result is the forming of a film/cellular/film laminate 1000.

It will be recognized that many variations of the above-presented exemplary process orders and arrangements exist. For example, film/cellular laminate that is input to the process shown in Fig. 10, might be made e.g. by bonding a film substrate to a surface of a cellular laminate of the type produced by the process of Fig. 4, rather than by bonding a cellular substrate to a film/cellular laminate of the type produced by the process of Fig. 8. Thus in summary, any variations and combinations of bonding the various substrates together into subassemblies, and further bonding substrates to such subassemblies, bonding subassemblies together, and so on, are within the scope of the disclosures herein. Further details of the order of bonding substrates and/or laminates together are discussed below.

It will be appreciated that any of the substrates, substrates, etc. that are discussed in the above illustrations may be bonded to each other by any of the above-discussed methods, e.g. self-bonding, direct melt-bonding, indirect-melt bonding, surface-bonding, and so on. However, it will also be appreciated that in some embodiments, input substrates to such processes may themselves be e.g. multilayer structures the layers of which are not necessarily all self-bonded, melt-bonded, and/or surface-bonded to each other.

In the above approaches, subassemblies and/or assemblies that are formed (and then are e.g. bonded to each other) may or may not be symmetrical and/or identical (e.g., they may or may not have the same number of cellular layers, may or may not have cellular layers of the same thickness, may or may not have the same number of film layers, may or may not have film layers of the same thickness, and so on).

The processes disclosed herein, and substrates and subassemblies disclosed herein, may be used in the production of any useful multilayer laminate. Some such laminates and potential uses thereof are discussed in U.S. Patent Application entitled Monolithic Multilayer Article, filed the same day as the present application. Any of the subassemblies and assemblies disclosed herein may be thermoformable. In specific embodiments, an assembly can be thermoformed in-line with (e.g., downstream of, and immediately after) the bonding process that is used to make the assembly.

In forming laminates as disclosed herein, processing steps (e.g., bonding steps) can be performed in any convenient order. For example, in embodiments in which a formed laminate comprises a cellular layer that is provided by the bonding of a single cellular substrate, a first film substrate can be bonded to a first side/surface of the cellular substrate, and a second film substrate can be bonded to the second side/surface of the cellular substrate. (In a variation on this, a film laminate can be used instead of one or both of the film substrates.)

In assemblies or subassemblies in which a formed laminate comprises a cellular layer that is a cellular laminate formed by the bonding together of multiple cellular substrates, variations on the bonding/assembly process are possible. In a first approach, two or more cellular substrates may be bonded together to form a cellular laminate, after which a first film substrate (or film laminate) and optionally a second film substrate (or film laminate) may be respectively bonded to the first and second major surfaces of the cellular laminate. In a second approach, a cellular substrate may be provided, and a film substrate or film laminate may be bonded onto one major surface of the cellular laminate to form a first cellular/film laminate subassembly. Such a cellular/film laminate subassembly may comprise an exposed major surface of a cellular layer on one side, and a film layer on the other side. A second such cellular/film laminate subassembly may be made, after which the exposed major surfaces of the cellular layers of each cellular/film laminate subassembly may be bonded together (or, in another embodiment, an additional cellular substrate may be bonded to the cellular layer of the first cellular/film laminate). An article may thus be formed comprising a cellular layer (e.g., a core layer) that is a cellular laminate that is formed by the bonding together of two cellular substrates.

It will be appreciated that the above second approach is an example of a general approach in which a cellular laminate (layer) of an article is not formed until the final bonding/assembly step in the making of the article. In a variation of this second general approach, instead of starting with a single cellular substrate, two (or more) cellular substrates may be bonded together to form a first cellular laminate subassembly. A film substrate or laminate may then be bonded onto one major surface of the first cellular laminate subassembly, to form a first cellular/film laminate subassembly (akin to that described in the previous paragraph, except that the cellular portion of the subassembly is comprised of two cellular substrates rather than one cellular substrate). Such a cellular/film laminate subassembly may comprise an exposed major surface of a cellular layer on one side, and a film layer on the other side. A second such cellular/film laminate subassembly may be made (which may have the same number of cellular substrates, or a different number of cellular substrates, as the first subassembly), after which the exposed major surfaces of the cellular layers of each cellular/film laminate subassembly may be bonded together to form an article. Again, in this approach, a cellular laminate that is e.g. an inner layer of an article may not be formed until the final bonding/assembly step in making the article. One or both film substrates and film laminates may be bonded to major surfaces of an existing cellular laminate, as the final step in the production of an article (such as e.g. a core-skin composite). Subassemblies may be made and then bonded together, such that a cellular laminate comprising the final number of cellular layers may not be formed until the final bonding/assembly step in producing the article.

For example, it may be convenient to order the bonding operations such that subassemblies (e.g., cellular/film laminates) are produced that are able to be handled e.g. on conventional laminating equipment (e.g., subassemblies are produced that can deform so that they can pass around curved surfaces of lamination rolls and the like). Such subassemblies can then be bonded together to form an article, as the final step in the assembly of the article. Such an approach may be more convenient than e.g. producing a fully-completed cellular laminate comprising multiple cellular layers (which cellular laminate may be stiff and e.g. difficult to handle in roll-good format), and then bonding films or film laminates to the outwardmost surfaces of the completed cellular laminate to form the final article. A film substrate may be self-bonded to a first major surface of a cellular substrate, to form a first cellular/film laminate subassembly. A second such cellular/film laminate subassembly (which may or may not be identical to the first) may be formed. These first and second subassemblies can then be attached to each other, by self-bonding the remaining exposed major surfaces of the cellular layers of the two subassemblies to each other. Thus will be formed an article (of the general type depicted in Fig. 9) comprising a cellular laminate inner core that is comprised of first and second cellular layers that are self-bonded to each other, and comprising first and second film layers that are self-bonded to oppositely-facing sides of the cellular laminate inner layer. Two cellular substrates may be self-bonded to each other to form a cellular laminate subassembly. A film layer may be self-bonded to a first major surface of the cellular laminate subassembly. Thus is formed a first cellular/film laminate subassembly (akin to that of the previous paragraph, except that the cellular portion of the subassembly is comprised of two cellular substrates rather than one). A second such cellular/film laminate subassembly (which may or may not be identical to the first) may be formed. These first and second subassemblies can then be attached to each other, by self-bonding the remaining exposed major surfaces of the cellular layers of the two subassemblies to each other. Thus will be formed an article (of the general type depicted in Fig. 10) comprising a cellular laminate inner core that is comprised of four cellular layers (two from each subassembly) that are self-bonded to each other, and comprising first and second film layers that are self-bonded to oppositely-facing sides of the cellular laminate inner layer. A cellular substrate and/or laminate may comprise a polyester foam, a microcellular polyester foam, etc. A film substrate may comprise e.g. an oriented polyester film, a biaxially-oriented polyester film, etc., as disclosed herein. Additional components (e.g., layers of material, etc.) may be added to, e.g. bonded to, the formed laminate (e.g., article). Such additional components might be e.g. positioned upon a major outward-facing surface of the laminate (for example, for protection, to enable placement or attachment of the laminate in a desired location, and so on). An ornamental or decorative layer may be provided as an outermost layer of at least one major side of the formed laminate. In alternative embodiments, the processing is limited to the bonding steps disclosed herein, which condition precludes any additional processing steps and/or addition of additional components or layers More specifically, no adhesive of any kind (e.g., pressure-sensitive adhesive, photocurable adhesive, thermally curable adhesive, solvent-based adhesive, aqueous or water-based adhesives, hot-melt adhesive, glue, and so on) is used in the bonding together of any portions of the article.

Given the above discussions, it will be appreciated that at least a certain amount of non-polyester material (e.g., whether in the guise of a non-polyester component such as a tie layer, a primer, a cover layer, a decorative or ornamental layer, an adhesive, etc.; or, in the guise of non-polyester additives that may be present in a polyester film and/or cellular layer) may be present in the formed laminate, except as precluded in various specific embodiments.

### List of Exemplary Embodiments

Embodiment 1. A method comprising: externally delivering thermal energy onto a first major bonding surface of a first moving polyester substrate so that the first major bonding surface of the first moving substrate is a heated surface; externally delivering thermal energy onto a first major bonding surface of a second moving polyester substrate so that the first major bonding surface of the second moving substrate is a heated surface; bringing the heated first major bonding surface of the first polyester substrate into proximity to the heated first major bonding surface of the second polyester substrate; and, self-bonding the first polyester substrate and the second polyester substrate to each other to form a, polyester laminate, wherein the first polyester substrate and/or the second poyester substrate comprises a polyester foam with a density of less than 0.2 g / cubic centimeter.

Embodiment 2. The method of embodiment 1 wherein the first moving polyester substrate comprises a first cellular substrate; wherein the second moving polyester substrate comprises a second cellular substrate, and wherein the formed polyester laminate is a cellular laminate.

Embodiment 3. The method of embodiment 1 wherein the first moving polyester substrate comprises a first polyester film; and, wherein the second moving polyester substrate comprises a second polyester film, and wherein the formed polyester laminate is a film laminate.

Embodiment 4. The method of embodiment 1 wherein the first moving polyester substrate comprises a cellular substrate or a cellular laminate; and, wherein the second moving polyester substrate comprises a film or a film laminate; and wherein the formed polyester laminate is a cellular/film laminate.

Embodiment 5. The method of embodiment 1 wherein the first moving polyester substrate comprises a cellular/film laminate, with a first major bonding surface that is a major surface of a cellular layer of the cellular/film laminate; and, wherein the second moving polyester substrate comprises a film or a film laminate; and wherein the formed polyester laminate is a film/cellular/film laminate.

Embodiment 6. The method of embodiment 1 wherein the first moving polyester substrate comprises a first cellular laminate; and, wherein the second moving polyester substrate comprises a cellular substrate or a cellular laminate; and wherein the formed polyester laminate is a cellular laminate that comprises more cellular layers than does the first cellular laminate.

Embodiment 7. The method of embodiment 1 wherein the first moving polyester substrate comprises a first cellular/film laminate, with a first major bonding surface that is a major surface of a cellular layer of the first cellular/film laminate; and, wherein the second moving polyester substrate comprises a cellular substrate or a cellular laminate; and wherein the formed polyester laminate is a cellular/film laminate that comprises more cellular substrates than does the first cellular laminate.

Embodiment 8. The method of embodiment 1 wherein the first moving polyester substrate comprises a first cellular/film laminate, with a first major bonding surface that is a major surface of a cellular layer of the first cellular/film laminate; and, wherein the second moving polyester substrate comprises a second cellular/film laminate, with a first major bonding surface that is a major surface of a cellular layer of the second cellular/film laminate; and wherein the formed polyester laminate is a film/cellular/film laminate.

Embodiment 9. The method of any of embodiments 1-8 wherein the first polyester substrate and/or the second polyester substrate comprises a biaxially-oriented polyester film.

Embodiment 10. The method of any of embodiments 1-8 wherein the first polyester substrate and/or the second polyester substrate comprises a polyester foam.

Embodiment 11. The method of embodiment 10 wherein the polyester foam is a thermoformable microcellular polyester foam.

Embodiment 12. The method of any of embodiments 1-11 wherein the method comprises bringing the heated first major bonding surface of the first polyester substrate into contact with the heated first major bonding surface of the second polyester substrate, so that the first polyester substrate is directly melt-bonded to the second polyester substrate.

Embodiment 13. The method of embodiment 12, wherein the externally delivering of thermal energy onto the first major bonding surface of the first moving polyester substrate and onto the first major bonding surface of the second moving polyester substrate comprises impinging a flame onto the first major bonding surface of the first moving polyester substrate and onto the first major bonding surface of the second moving polyester substrate.

Embodiment 14. The method of embodiment 12, wherein the externally delivering of thermal energy onto the first major bonding surface of the first moving polyester substrate and onto the first major bonding surface of the second moving polyester substrate comprises impinging electromagnetic radiation onto the first major bonding surface of the first moving polyester substrate and onto the first major bonding surface of the second moving polyester substrate.

Embodiment 15. The method of embodiment 12, wherein the externally delivering of thermal energy onto the first major bonding surface of the first moving polyester substrate and onto the first major bonding surface of the second moving polyester substrate comprises impinging heated gaseous fluid onto the first major bonding surface of the first moving polyester substrate.

Embodiment 16. The method of any of embodiments 1-11, wherein the externally delivering of thermal energy onto the first major bonding surface of the first moving polyester substrate and onto the first major bonding surface of the second moving polyester substrate comprises impinging a first surface of a molten polyester extrudate onto the first major bonding surface of the first moving polyester substrate and a second surface of the molten polyester extrudate onto the first major bonding surface of the second moving polyester substrate.

Embodiment 17. The method of any of embodiments 1-16 wherein the first major bonding surface of the first moving polyester substrate is a quasi-amorphous, flashlamped surface.

Embodiment 18. The method of any of embodiments 1-17 wherein the first major bonding surface of the second moving polyester substrate is a quasi-amorphous, flashlamped surface.

Embodiment 19. The method of any of embodiments 1-18 wherein the formed polyester laminate is a thermoformable multilayer article comprising a thermoformable cellular polyester core layer; that is a polyesters foam layer with a density of less than 0.2 g/cubic centimeter a first biaxially oriented polyester skin layer on the first major side of the polyester core layer; and, a second biaxially oriented polyester skin layer on the second major side of the polyester core, wherein the core layer and the first skin layer are self-bonded to each other and wherein the core layer and the second skin layer are self-bonded to each other.

Embodiment 20. The method of any of embodiments 1-19 further comprising the step of thermoforming the formed polyester laminate so that both the first polyester substrate and the second polyester substrate are thermoformed.

Embodiment 21. The method of any of embodiments 1-20 wherein the entirety of each of the first and second moving polyester substrates are each polymers of like composition.

Embodiment 22. The method of any of embodiments 1-21 wherein the method includes the step of flashlamping at least the first major bonding surface of the first moving polyester substrate, in-line with the self-bonding the first polyester substrate and the second polyester substrate to each other to form the polyester laminate.

Embodiment 23. The method of any of embodiments 1-22 wherein either the first moving polyester substrate, or the second moving polyester substrate, or both, consist of recycled polyester.

Embodiment 24. The method of any of embodiments 1-23 wherein either the first moving polyester substrate, or the second moving polyester substrate, or both, consist of recyclable polyester.

Embodiment 25. The method of any of embodiments 1-20 and 22-24 wherein the first moving polyester substrate and the second moving polyester substrate are comprised of polymers of like composition chosen from the group consisting of poly(ethylene terephthalate), poly(ethylene naphthalate), poly(butylene terephthalate), and copolymers of like composition thereof.

Embodiment 26. The method of embodiment 25 wherein the polyesters of like composition all consist essentially of poly(ethylene terephthalate).

### Examples

### Test Methods

The coefficient of thermal expansion of substrates, e.g. in the range of +20 to +60 C, may be evaluated according to the following general procedure. A film sample may be cut into a strip (e.g., 1 inch wide) and mounted on a frictionless slide and an initial length recorded. A slot oven is then slid over the sample and the test strip is heated to a desired hold temperature. After a predetermined time, the sample length is recorded, the oven is disengaged, and the sample is allowed to cool back to room temperature and the final sample length is recorded (a laser telemetric system may be used to measure the sample length). Throughout the test, the sample may be tensioned under a very slight load to ensure adequate flatness. The coefficient of linear thermal expansion is the difference in lengths at the elevated temperature and the final length after cooling back to room temperature divided by the product of the final length and the temperature difference.

### Substrates

Microcellular polyester foam substrates were obtained from MicroGREEN Polymers, Inc., Arlington, WA, under the trade designation INCYCLE. The cellular substrates were obtained as 40 cm (16 inches) or in some cases 50 cm (20 inches) wide roll goods and comprised a thickness of approximately 2 mm (80 mils) and a density of about 0.38 grams / cubic centimeter. Conventional (non-microcellular) polyester foam substrates were obtained from ATL Composites, Southport, Australia, under the trade designation AIREX T92, and from Armacell Inc., Mebane, NC. The AIREX foam substrates were obtained as approximately 4 foot x 8 foot sheets and were sawn along their length and width to provide substrates of approximately 5 mm (0,2 inches) thickness. The debris from the sawing process was removed by vacuuming, thus leaving behind a fairly rough-textured surface as the result of the sawing process. The Armacell foam substrates were approximately 12.5mm (0.2 inches) thick as received. It was estimated that the conventional foams comprised a cell size in the range of approximately 0.2 - 2 mm.

Biaxially-oriented polyester film substrates were obtained from 3M Company, St. Paul, MN. The substrates were poly(ethylene terephthalate) comprising approximately 1.1 - 1.6 mole % di(ethylene glycol), that had been extruded onto a casting wheel and quenched, and then preheated and length oriented to a nominal machine-direction draw ratio of approximately 2.9, and transversely oriented to a nominal cross-direction draw ratio of approximately 3.7, and then annealed. The film substrates were obtained as roll goods and comprised a thickness of approximately 0.35 mm (14 mils) and a density of approximately 1.37 grams / cubic centimeter. The film substrates were typically obtained at wide widths and then slit to approximately 40 cm (16 inch) width prior to the operations described below.

### Flashlamp treatment

Some of the (microcellular foam) cellular polyester substrates, and some of the (biaxially-oriented) polyester film substrates, were flashlamped with pulsed-ultraviolet radiation, in accordance with the general principles and procedures outlined in U.S. Patents 5,032,209, 4,822,451 and 4,879,176. The lamp comprised an approximately 4.2 mm inner diameter, approximately 6.0 mm outer diameter, and an arc length of approximately 635 mm. The lamp was xenon filled to a nominal pressure of 200 torr, and comprised an envelope of un-doped flame-fused natural silica (type HQG-LA). The lamp was operated at 24kV, 195 mJ/cm², at an overlap of 2x. Substrate samples were passed through the flashlamp radiation at a line speed of approximately 7m/min (23 feet/ min) at a distance from the lamp of approximately 4,7 cm (1.875 inches). These flashlamp treatments produced a quasi-amorphous layer on the surface of the flashlamped substrate. By comparing the UV/vis spectra (as obtained via a Perkin Elmer Lambda 900 UV/vis Spectrophotometer) of the flashlamp treated film to an untreated film, the thickness of the resulting quasi-amorphous surface layer could be estimated. It was estimated that the quasi-amorphous layer was typically approximately 500 nm in thickness.

### Example 1 - Cellular to cellular lamination - flame

Two cellular polyester substrates (INCYCLE, 2mm (80 mil) thickness) were passed from unwind rolls into a nip provided by a 2-roll horizontal stack, comprising two 30 cm (12 inch) diameter chrome plated rolls, 16 inches wide. The bonding surface of each cellular polyester substrate was a flashlamped surface. A 3D configuration flame burner of approximately 22.5 cm (9 inch) width was obtained from Flynn Burner, New Rochelle, NY. The burner was positioned approximately 21.6 cm (8,5 inches) away from the nip and was oriented vertically with the flame pointing toward the nip. The flame length was approximately 12.5-15 cm (5-6 inches) such that the flame tip was approximately 6.2-8.7 cm (2.3-3.5 inches) away from the bonding surfaces of the substrates at the contact point of the surfaces with each other. The burner was operated at a flame power of approximately 3000 BTU/hr-in, with an excess % oxygen of approximately 1.5 %. The burner was thus used to heat an approximately 22 cm (9 inch) wide portion (stripe) of the 40 cm (16 inches) wide cellular substrate.

In some experiments, the nip pressure was maintained at a nominal pressure of approximately 15 psi on one roll and a nominal pressure of approximately 5 psi on the other roll and the apparatus was operated at a line speed of approximately 3 m (10 feet) per minute. In other experiments, the nip pressure was maintained at approximately 20 psi on each roll, the burner flame power was approximately 8000 BTU/hr-in, and the apparatus was operated at a line speed of approximately 15 m (50 feet) per minute. Excellent bonding was obtained, so as to provide cellular laminates (of the general type depicted in Fig. 4) that could be rolled up as roll goods.

### Example 2 - Cellular to cellular lamination - flame

Two cellular polyester substrates (INCYCLE, 80 mil thickness) were passed into a nip (2-roll stack) as in Example 1, with the difference being that the bonding surface of each cellular polyester substrate was not a flashlamped surface. A burner was configured as in Example 1. In some experiments, burner was operated at a flame power of approximately 0.9KW (3000 BTU/hr.in) the nip pressure was maintained at a nominal pressure approximately 103421 Pa (15 psi) on one roll and approximately 34474 Pa (5 psi) on the other roll, and the apparatus was operated at a line speed of approximately 3m (10 feet) per minute. In other experiments, the burner flame power was approximately 2,4 KW (8000BTU/hr.in) the nip pressure was maintained at approximately 137896 Pa (20 psi) on each roll, and the apparatus was operated at a line speed of approximately 50 feet per minute. Excellent bonding was obtained, so as to provide cellular laminates (of the general type depicted in Fig. 4) that could be rolled up as roll goods. It will be appreciated that the methods of Examples 1 and 2 might be used e.g. to combine any number of cellular substrates of any desired type, to form a cellular laminate of a desired thickness and/or stiffness.

### Example 3 - Cellular to film lamination - flame

A cellular polyester substrate (INCYCLE, 2mm (80 mil) thickness) and a polyester film substrate (0.36 mm (14 mil) biaxially-oriented polyester) were passed into a nip (2-roll stack) as in Example 1. Both surfaces of the cellular polyester substrate were flashlamped surfaces; a first (bonding) surface of the polyester film substrate was a flashlamped surface. A burner was configured as in Example 1. In some experiments, the burner was operated at a flame power of approximately 0.9 KW (3000 BTU/hr.in) the nip pressure was maintained at approximately 103422 Pa (15 psi) on each roll, and the apparatus was operated at a line speed of approximately 3.01 m (10 feet) per minute. In other experiments, the burner was operated at a flame power of approximately 8000 BTU/hr-in, the nip pressure was maintained at approximately 137896 Pa (20 psi) on each roll, and the apparatus was operated at a line speed of approximately 15.2 m (50 feet) per minute. Excellent bonding was obtained, so as to provide cellular/film laminates (of the general type depicted in Fig. 5) that could be rolled up as roll goods.

### Example 4 - Cellular to film lamination - flame

A cellular polyester substrate (INCYCLE, 80 mil thickness) and a polyester film substrate 0.35 mm (14 mil biaxially-oriented polyester) were bonded as in Example 3, with the difference being that the bonding surface of the cellular polyester substrate was not a flashlamped surface (the bonding surface of the polyester film substrate was a flashlamped surface). A burner was configured as in Example 1. The burner was operated at a flame power of approximately 0.9 KW (3000 BTU/hr.in) the nip pressure was maintained at approximately 103421 Pa (15psi) on each roll, and the apparatus was operated at a line speed of approximately 3.04 m (10 feet) per minute. Excellent bonding was obtained, so as to provide cellular/film laminates (of the general type depicted in Fig. 5) that could be rolled up as roll goods.

### Example 5 - Cellular to film lamination - tie layer

A polyester substrate (INCYCLE microcellular foam, 80 mil thickness) and a polyester film substrate (0.35 mm e.g. 14 mil biaxially-oriented polyester) were passed from unwind rolls into a nip (2-roll stack) comprising a top, 30.5 cm (12 inch) diameter rubber coated roll that was operated at a nominal temperature of approximately 21 °C (70 °F), and a bottom, 10 inch diameter chrome-plated roll that was controlled to a nominal set point of approximately 66 °C (150 °F). Both surfaces of the cellular polyester substrate were flashlamped surfaces; a first (bonding) surface of the polyester film substrate was a flashlamped surface. Molten poly(ethylene terephthalate) (obtained from Eastman Chemical, Kingsport, TN, under the trade designation EASTAPAK 7352) was extruded from a 6.35 cm (2.5 inch) Davis Standard extruder, operating at screw speed of approximately 12.5 rpm, a melt pressure of approximately 5 MPa (750 psi) and at a die temperature of approximately 277 °C (530 °F). The molten extrudate was guided into the nip between the two polyester substrates, so as to contact a first flashlamped surface of the cellular substrate, and the flashlamped bonding surface of the film substrate, in generally similar manner to the arrangement depicted in Fig. 2. The nip pressure was maintained at a nominal pressure of approximately 226 kgf (500 Pounds) and the apparatus was operated at a line speed of approximately 3.04 m (10 feet) per minute. The polyester substrates with the molten extrudate therebetween were passed horizontally through the nip of the two-roll stack and exited the nip generally horizontally. Upon cooling of the substrates during this process, the molten extrudate solidified into a tie layer so as to form an excellent bond to both substrates. The thickness of the thus-formed tie layer was approximately 0.076-0.10 mm (3-4 mils). Thus were formed laminates comprising one layer of 4mm (80 mils) microcellular polyester foam, bonded by the tie layer to one layer of 14 biaxially-oriented polyester film. These cellular/film laminates (of the general type depicted in Fig. 5, except with a tie layer in between layers 500 and 600) could be rolled up as roll goods.

### Example 6

### Example 6a - Film to film lamination

0.35 mm (14 mil) biaxially-oriented polyester film substrates were flashlamped on both sides in generally similar manner as described above, to an average flux of approximately 200 mJ/cm². The flashlamped film substrates were then passed from unwind rolls into a nip (2-roll stack) comprising metal rolls controlled to a nominal set point of approximately 375 degrees C. The nip was maintained at a nominal pressure of approximately 55 kN/m (315 pounds per linear inch) and the apparatus was operated at a line speed of approximately 15 cm 0.5 feet per minute. Excellent bonding was obtained, so as to provide film/film laminates that could be rolled up as roll goods. Thus were formed two-layer (i.e., two-sublayer) film/film laminates, each laminate comprising two 0.35 mm (14 mil) biaxially-oriented polyester films, self-bonded to each other.

### Example 6b - Film/film to cellular lamination (tie layer)

A cellular polyester substrate (AIREX T92 conventional polyester foam, sawed to 5 mm (0.2 inches) thickness) and a two-layer polyester film laminate substrate (the product of Example 6a) were bonded together in generally similar manner as in Example 5, by the extrusion of a molten polyester tie layer. The bonding surface of the multilayer polyester laminate substrate was a flashlamped surface. The bonding surface of the cellular polyestersubstrate (conventional polyester foam) was not a flashlamped surface. Since the 5mm (0.2 inch) thick cellular polyester substrate was too stiff to be easily processed as a roll good, the 2-roll stack was maintained at a pressure sufficiently low that individual pieces (sheets) of the cellular polyester substrate could be fed into the nip (on the side opposite the tie layer from the two-layer laminate substrate). The feeding of individual pieces of cellular substrate into the nip in this manner produced individual sheets of cellular substrate with a two-layer polyester laminate skin bonded to one major side and surface thereof. Such sheets could then be fed back into the nip, with the remaining exposed (bonding) surface of the cellular substrate facing the tie layer, so as to produce individual sheets of cellular substrate with a two-layer polyester laminate bonded to each major side and surface thereof.

Excellent bonding was achieved in general; however, it was found that the bonding was enhanced when the tie layer was approximately 0.12 mm (5 mils) or greater thickness, in comparison to a tie layer thickness of approximately 0.076 mm (3 mils). (It was believed that the former case allowed the molten tie layer material to penetrate slightly further into the cells of the conventional polyester foam thus enhancing the bond). Thus were formed in one instance cellular/film laminates comprising a core layer of 5 mm (0.2 inch) thick polyester foam, bonded by a tie layer to a 0.71 mm (28 mil) multilayer skin (comprised of two 0.36 mm (14mil) biaxially-oriented polyester film sublayers) on a first surface of the foam. Thus were formed in a second instance film/cellular/film laminates comprising a core layer of 5 mm (0.2 inch) thick polyester foam, bonded by a tie layer to a 0.7 mm (28 mil) multilayer skin (comprised of two 0.35 mm (14 mil) biaxially-oriented polyester film sublayers) on a first major surface of the foam, and likewise bonded to a similar multilayer polyester skin on a second major surface of the foam.

Similar experiments were performed, with similar results, with conventional polyester foams (of approximately 12.5 mm (0.5 inch) thickness) obtained from Armacell Inc.

### Example 7 - Cellular/film to cellular lamination - IR

A cellular/film laminate (the product of Example 5) and a cellular polyester substrate (INCYCLE microcellular foam, 80 mil thickness) were passed from unwind rolls into a nip (2-roll stack) of the type described in Example 5. The cellular/film laminate was oriented with an exposed flashlamped surface of the cellular substrate of the laminate facing outward (away from the backing roll over which it passed, i.e. so as to face, and eventually contact and bond to, a flashlamped surface of the cellular polyester substrate). An infrared (IR) lamp (obtained from Research Inc., Minneapolis, MN, under the trade designation Model 5193 High-Intensity Infrared Elliptical Reflector with parabolic reflectors was focused at the nip interface. The IR lamp had a rated power of 1.60 kW, a heat flux of 2.7 KW/m (67 W/linear inch) and was run at 100% power. The nip pressure was maintained at approximately 136 kgf (300 Pound) and apparatus was operated at a line speed of approximately 3 feet per minute. Both of the rolls of the stack were operated at a nominal temperature of approximately 70 F. This process was found to form an excellent bond between the flashlamped exposed surfaces of the two cellular substrates. Thus were formed cellular/film laminates comprising a cellular layer of two cellular substrates (each substrate an 2 mm (80 mils) thick microcellular polyester foam) bonded to each other, with one layer of biaxially-oriented polyester film bonded to the surface of one of the cellular substrates. These cellular/film laminates (of the general type depicted in Fig. 8, except with a tie layer in between layers 500 and 600) could be rolled up as roll goods.

### Example 8 - Cellular/film - cellular/film lamination - IR

Two cellular/film laminates (each the product of Example 7) were passed from unwind rolls into a nip (2-roll stack). Each laminate was oriented with an exposed flashlamped surface of a cellular substrate of the laminate facing outward (so as to face, and eventually contact and bond to, the exposed flashlamped surface of the other cellular polyester substrate). The IR lamp of Example 7 was used in similar manner as in Example 7. This process was found to form an excellent bond between the flashlamped exposed surfaces of the two cellular substrates. Thus were formed laminates comprising a cellular layer of four cellular substrates (each substrate an 2mm (80 mil) thick microcellular polyester foam) bonded to each other, with one layer of 14 mil biaxially-oriented polyester film being bonded to the outermost major surfaces of the cellular layer (That is, the formed laminates were of the general type depicted in Fig. 10 except with a first tie layer in between layers 500 and 600 and a second tie layer in between layers 500' and 600"). The thus-formed laminates (comprising a cellular core layer flanked by first and second biaxially-oriented polyester skin layers) were too stiff to be easily rolled up as roll goods, and were typically sheeted into discrete lengths.

Laminates produced by the methods of Example 8 were tested for flexural modulus by way of a three-point bending test in generally similar manner to the procedures outlined in ASTM Test Method D790-10 as specified in 2010. An Instron testing apparatus was used with a compression rated 453 kg (1000 Lb) load-cell. The test fixture's loading nose and supports were free to rotate and had a radius of approximately 6 mm (0.25"). The span of the fixture was 15 cm (6 inches) wide. The sample test specimens comprised an average thickness of approximately 7 mm (0.28 inches), and were cut to 25.4 cm (10 inches) long by 2.5 cm (1 inch) wide. Five specimens were tested, at a strain rate of 1%/min. The average flexural modulus for the five samples was 1840 MPa (267 ksi), high of 1889 Mpa (274 ksi), low of 1820 MPa (264 ksi). Laminates produced by the methods of Example 8 were tested for tensile shear properties by way of tests performed in generally similar manner to the procedures outlined in ASTM Test Method C273 as specified in 2007. An Instron testing apparatus was used with a 100-kN load cell. The sample test specimens were approximately 7 mm thick (0.28 inches), 50 mm wide (2 inches) and 100 mm long (4 inches). Samples were mounted to disposable steel sheets with 3M Scotch-Weld Epoxy Adhesive DP420 with a reported shear strength of 31 MPa (4500 psi). Two specimens were tested, at an extension rate of 12.5 mm (0.5 inches) per minute. For each, the modulus was calculated from the linear portion of the stress-strain curve between 1 and 2% strain. The first sample exhibited a shear modulus of approximately 60 MPa (8.7 ksi); the second sample exhibited a shear modulus of approximately 75 MPa (10.9 ksi). The first specimen failed at the interface between the biaxially-oriented polyester film and the microcellular polyester foam; for the second specimen, failure occurred at the interface between the epoxy adhesive and the biaxially-oriented polyester film before failure of the polyester film - polyester foam interface. The first sample exhibited an ultimate shear strength of approximately 117 MPa (17000 psi); the second sample exhibited an ultimate shear strength of approximately 86 MPa (12500 psi).

### Example 9 - Thermoforming of laminates

Polyester laminates (the product of Example 8) were preheated for approximately 2 minutes between parallel metal platens set approximately 20 mm apart and maintained at a nominal temperature of approximately 200 degrees C. The preheated laminates (each being approximately 20 cm x 20 cm (8 inches x 8 inches) were manually placed between steel male/female mating molds that combined to form a parallel-walled cavity comprising a truncated hemispherical section, approximately 5 inches in diameter and with a maximum offset of approximately 2.5 cm (1 inch) (from the plano surface of the mold wall) at the radial center of the hemispherical cavity. The molding surfaces of the molds (that is, the surfaces of each mold that faced each other so as to deform the laminate therebetween) were generally parallel to, and congruent with, each other at facing locations within the cavity. The molds were not preheated.

Adhesive tape was used to tape each laminate to the bottom mold. The molds were positioned within an unheated hydraulic press (obtained from Carver, Inc., Wabash, IN) with the female mold on the bottom. A layer of compressible polymeric foam was positioned between the male mold and the upper platen of the press. Typically, the molds were closed together with a clamping force in the range of approximately 453 kg (1000 pounds), and the parts were left clamped in the mold for approximately 5-10 minutes to cool prior to being removed. This process was found to satisfactorily thermoform an approximately 12.5 cm (5 inch) diameter portion (area) of the laminate into a truncated hemispherical protrusion comprising a first, convex surface on a first side of the laminate (as shown in the photograph of a typical thermoformed laminate found in Fig. 11), and a second, concave surface on the other side of the thermoformed portion of the laminate, the second surface being generally parallel to the first surface. The thermoformed laminate maintained this structure with little warpage or creep. The thus-produced thermoformed polyester laminates comprised an excellent combination of strength and light weight.

The tests and test results described above are intended solely to be illustrative, rather than predictive, and variations in the testing procedure can be expected to yield different results. All quantitative values in the Examples section are understood to be approximate in view of the commonly known tolerances involved in the procedures used. The foregoing detailed description and examples have been given for clarity of understanding only. No unnecessary limitations are to be understood therefrom.

It will be apparent to those skilled in the art that the specific exemplary structures, features, details, configurations, etc., that are disclosed herein can be modified and/or combined in numerous embodiments. All such variations and combinations are contemplated by the inventor as being within the bounds of the conceived invention. Thus, the scope of the present invention should not be limited to the specific illustrative structures described herein, but rather extends at least to the structures described by the language of the claims, and the equivalents of those structures.

## Claims

1. A method comprising:
externally delivering thermal energy onto a first major bonding surface (101) of a first moving polyester substrate (100) so that the first major bonding surface (101) of the first moving substrate (100) is a heated surface;
externally delivering thermal energy onto a first major bonding surface (201) of a second moving polyester substrate (200) so that the first major bonding surface (201) of the second moving substrate (200) is a heated surface;
bringing the heated first major bonding surface (101) of the first polyester substrate (100) into proximity to the heated first major bonding surface (201) of the second polyester substrate (200);
and,
self-bonding the first polyester substrate (100) and the second polyester substrate (200) to each other to form a polyester laminate (400),
wherein the first polyester substrate (100) and/or the second polyester substrate (200) comprises a polyester foam with a density of less than 0.2 g /cubic centimeter.

2. The method of claim 1 wherein the first polyester substrate (100) and/or the second polyester substrate (200) comprises a biaxially-oriented polyester film.

3. The method of claim 1 wherein the polyester foam is a thermoformable microcellular polyester foam.

4. The method of claim 1, wherein the method comprises bringing the heated first major bonding surface (101) of the first polyester substrate (100) into contact with the heated first major bonding surface (201) of the second polyester substrate (200), so that the first polyester substrate (100) is directly melt-bonded to the second polyester substrate (200).

5. The method of claim 4, wherein the externally delivering of thermal energy onto the first major bonding surface (101) of the first moving polyester substrate (100) and onto the first major bonding surface (201) of the second moving polyester substrate (200) comprises impinging a flame onto the first major bonding surface (101) of the first moving polyester substrate (100) and onto the first major bonding surface (201) of the second moving polyester substrate (200).

6. The method of claim 4, wherein the externally delivering of thermal energy onto the first major bonding surface (101) of the first moving polyester substrate (100) and onto the first major bonding surface (201) of the second moving polyester substrate (200) comprises impinging electromagnetic radiation onto the first major bonding surface (101) of the first moving polyester substrate (100) and onto the first major bonding surface (201) of the second moving polyester substrate (200).

7. The method of claim 4, wherein the externally delivering of thermal energy onto the first major bonding surface (101) of the first moving polyester substrate (100) and onto the first major bonding surface (201) of the second moving polyester substrate (200) comprises impinging heated gaseous fluid onto the first major bonding surface (101) of the first moving polyester substrate (100).

8. The method of claim 1, wherein the externally delivering of thermal energy onto the first major bonding surface (101) of the first moving polyester substrate (100) and onto the first major bonding surface (201) of the second moving polyester substrate (200) comprises impinging a first surface (311) of a molten polyester extrudate (312) onto the first major bonding surface (101) of the first moving polyester substrate (100) and a second surface (313) of the molten polyester extrudate (312) onto the first major bonding surface (201) of the second moving polyester substrate (200).

9. The method of claim 1 wherein the first major bonding surface (101) of the first moving polyester substrate (100) is a quasi-amorphous, flashlamped surface.

10. The method of claim 1 wherein the first major bonding surface (201) of the second moving polyester substrate (200) is a quasi-amorphous, flashlamped surface.

11. The method of claim 1 wherein the formed polyester laminate (400, 1000) is a thermoformable multilayer article comprising:
a thermoformable cellular polyester core layer (600) that is a polyester foam layer with a density of less than 0.2 g /cubic centimeter; a first biaxially oriented polyester skin layer (500) on the first major side of the polyester core layer (600);
and,
a second biaxially oriented polyester skin layer (500') on the second major side of the polyester core layer (600),
wherein the core layer (600) and the first skin layer (500) are self-bonded to each other and wherein the core layer (600) and the second skin layer (500') are self-bonded to each other.

12. The method of claim 1 further comprising the step of thermoforming the formed polyester laminate (400) so that both the first polyester substrate (100) and the second polyester substrate (200) are thermoformed.

13. The method of claim 1 wherein the entirety of each of the first and second moving polyester substrates (100, 200) are each polymers of like composition.

14. The method of claim 1 wherein the method includes the step of flashlamping at least the first major bonding surface (101) of the first moving polyester substrate (100), in-line with the self-bonding the first polyester substrate (100) and the second polyester substrate (200) to each other to form the polyester laminate (400).

## Patentansprüche

1. Verfahren, umfassend:
externes Leiten von Wärmeenergie auf eine erste Hauptklebefläche (101) eines ersten; sich bewegenden Polyestersubstrats (100), so dass die erste Hauptklebefläche (101) des ersten; sich bewegenden Substrats (100) eine erwärmte Fläche ist;
externes Leiten von Wärmeenergie auf eine erste Hauptklebefläche (201) eines zweiten; sich bewegenden Polyestersubstrats (200), so dass die erste Hauptklebefläche (201) des zweiten; sich bewegenden Substrats (200) eine erwärmte Fläche ist;
Annähern der ersten Hauptklebefläche (101) des ersten Polyestersubstrats (100) an die erwärmte erste Hauptklebefläche (201) des zweiten Polyestersubstrats (200);
und
selbstklebendes Verbinden des ersten Polyestersubstrats (100) und des zweiten Polyestersubstrats (200) miteinander, um ein Polyesterlaminat (400) zu bilden,
wobei das erste Polyestersubstrat (100) und/oder das zweite Polyestersubstrat (200) einen Polyesterschaum mit einer Dichte von weniger als 0,2 g/Kubikzentimeter umfasst.

2. Verfahren nach Anspruch 1, wobei das erste Polyestersubstrat (100) und/oder das zweite Polyestersubstrat (200) eine biaxial ausgerichtete Polyesterfolie umfasst.

3. Verfahren nach Anspruch 1, wobei der Polyesterschaum ein wärmeformbarer, mikrozelliger Polyesterschaum ist.

4. Verfahren nach Anspruch 1, wobei das Verfahren Inkontaktbringen der erwärmten ersten Hauptklebefläche (101) des ersten Polyestersubstrats (100) mit der erwärmten ersten Hauptklebefläche (201) des zweiten Polyestersubstrats (200) umfasst, so dass das erste Polyestersubstrat (100) direkt an das zweite Polyestersubstrat (200) angeschmolzen wird.

5. Verfahren nach Anspruch 4, wobei das externe Leiten von Wärmeenergie auf die erste Hauptklebefläche (101) des ersten, sich bewegenden Polyestersubstrats (100) und auf die ersten Hauptklebefläche (201) des zweiten, sich bewegenden Polyestersubstrats (200) Auftreffenlassen einer Flamme auf die erste Hauptklebefläche (101) des ersten, sich bewegenden Polyestersubstrats (100) und auf die erste Hauptklebefläche (201) des zweiten, sich bewegenden Polyestersubstrats (200) umfasst.

6. Verfahren nach Anspruch 4, wobei das externe Leiten von Wärmeenergie auf die erste Hauptklebefläche (101) des ersten, sich bewegenden Polyestersubstrats (100) und auf die ersten Hauptklebefläche (201) des zweiten, sich bewegenden Polyestersubstrats (200) Auftreffenlassen von elektromagnetischer Strahlung auf die erste Hauptklebefläche (101) des ersten, sich bewegenden Polyestersubstrats (100) und auf die erste Hauptklebefläche (201) des zweiten, sich bewegenden Polyestersubstrats (200) umfasst.

7. Verfahren nach Anspruch 4, wobei das externe Leiten von Wärmeenergie auf die erste Hauptklebefläche (101) des ersten, sich bewegenden Polyestersubstrats (100) und auf die ersten Hauptklebefläche (201) des zweiten, sich bewegenden Polyestersubstrats (200) Auftreffenlassen von erwärmtem, gasförmigem Fluid auf die erste Hauptklebefläche (101) des ersten, sich bewegenden Polyestersubstrats (100) umfasst.

8. Verfahren nach Anspruch 1, wobei das externe Leiten von Wärmeenergie auf die erste Hauptklebefläche (101) des ersten, sich bewegenden Polyestersubstrats (100) und auf die erste Hauptklebefläche (201) des zweiten, sich bewegenden Polyestersubstrats (200) Auftreffenlassen einer ersten Fläche (311) eines geschmolzenen Polyesterextrudats (312) auf die erste Hauptklebefläche (101) des ersten, sich bewegenden Polyestersubstrats (100) und eine zweite Fläche (313) des geschmolzenen Polyesterextrudats (312) auf die erste Hauptklebefläche (201) des zweiten, sich bewegenden Polyestersubstrats (200) umfasst.

9. Verfahren nach Anspruch 1, wobei die erste Hauptklebefläche (101) des ersten, sich bewegenden Polyestersubstrats (100) eine quasiamorphe, mit einer Blitzlampe bestrahlte Fläche ist.

10. Verfahren nach Anspruch 1, wobei die erste Hauptklebefläche (201) des zweiten, sich bewegenden Polyestersubstrats (200) eine quasiamorphe, mit einer Blitzlampe bestrahlte Fläche ist.

11. Verfahren nach Anspruch 1, wobei das gebildete Polyesterlaminat (400, 1000) ein wärmeformbarer, mehrschichtiger Artikel ist, umfassend:
eine wärmeformbare, zellige Polyesterkernschicht (600), die eine Polvesterschaumschicht mit einer Dichte von weniger als 0,2 g/Kubikzentimeter ist;
eine erste biaxial ausgerichtete Polyesteraußenschicht (500) auf der ersten Hauptseite der Polyesterkernschicht (600);
und
eine zweite biaxial ausgerichtete Polyesteraußenschicht (500') auf der zweiten Hauptseite der Polyesterkernschicht (600),
wobei die Kernschicht (600) und die erste Außenschicht (500) selbstklebend miteinander verbunden sind, und wobei die Kernschicht (600) und die zweite Außenschicht (500') selbstklebend miteinander verbunden sind.

12. Verfahren nach Anspruch 1, ferner umfassend den Schritt des Wärmeformens des gebildeten Polyesterlaminats (400), so dass sowohl das erste Polyestersubstrat (100) als auch das zweite Polyestersubstrat (200) wärmegeformt werden.

13. Verfahren nach Anspruch 1 wobei die Gesamtheit von jedem von dem ersten und zweiten, sich bewegenden Polyestersubstrat (100, 200) jeweils Polymere gleicher Zusammensetzung sind.

14. Verfahren nach Anspruch 1, wobei das Verfahren den Schritt des Blitzlampenbestrahlens mindestens der ersten Hauptklebefläche (101) des ersten, sich bewegenden Polyestersubstrats (100) in Übereinstimmung mit dem Selbstkleben des ersten Polyestersubstrats (100) und des zweiten Polyestersubstrats (200) aneinander beinhaltet, um das Polyesterlaminat (400) zu bilden.

## Revendications

1. Procédé comprenant :
la distribution externe d'énergie thermique sur une première surface principale de liaison (101) d'un premier substrat de polyester en mouvement (100) de sorte que la première surface principale de liaison (101) du premier substrat en mouvement (100) est une surface chauffée ;
la distribution externe d'énergie thermique sur une première surface principale de liaison (201) d'un deuxième substrat de polyester en mouvement (200) de sorte que la première surface principale de liaison (201) du deuxième substrat en mouvement (200) est une surface chauffée ;
le rapprochement de la première surface principale de liaison chauffée (101) du premier substrat de polyester (100) à proximité de la première surface principale de liaison chauffée (201) du deuxième substrat de polyester (200) ;
et,
l'auto-liaison du premier substrat de polyester (100) et du deuxième substrat de polyester (200) l'un à l'autre pour former un stratifié de polyester (400),
dans lequel le premier substrat de polyester (100) et/ou le deuxième substrat de polyester (200) comprennent une mousse de polyester avec une masse volumique inférieure à 0,2 g/centimètre cube.

2. Procédé selon la revendication 1, dans lequel le premier substrat de polyester (100) et/ou le deuxième substrat de polyester (200) comprennent un film de polyester orienté biaxialement.

3. Procédé selon la revendication 1, dans lequel la mousse de polyester est une mousse de polyester microcellulaire thermoformable.

4. Procédé selon la revendication 1, où le procédé comprend la mise en contact de la première surface principale de liaison chauffée (101) du premier substrat de polyester (100) avec la première surface principale de liaison chauffée (201) du deuxième substrat de polyester (200), de sorte que le premier substrat de polyester (100) est directement lié par fusion au deuxième substrat de polyester (200).

5. Procédé selon la revendication 4, dans lequel la distribution externe d'énergie thermique sur la première surface principale de liaison (101) du premier substrat de polyester en mouvement (100) et sur la première surface principale de liaison (201) du deuxième substrat de polyester en mouvement (200) comprend l'application d'une flamme sur la première surface principale de liaison (101) du premier substrat de polyester en mouvement (100) et sur la première surface principale de liaison (201) du deuxième substrat de polyester en mouvement (200).

6. Procédé selon la revendication 4, dans lequel la distribution externe d'énergie thermique sur la première surface principale de liaison (101) du premier substrat de polyester en mouvement (100) et sur la première surface principale de liaison (201) du deuxième substrat de polyester en mouvement (200) comprend l'application d'un rayonnement électromagnétique sur la première surface principale de liaison (101) du premier substrat de polyester en mouvement (100) et sur la première surface principale de liaison (201) du deuxième substrat de polyester en mouvement (200).

7. Procédé selon la revendication 4, dans lequel la distribution externe d'énergie thermique sur la première surface principale de liaison (101) du premier substrat de polyester en mouvement (100) et sur la première surface principale de liaison (201) du deuxième substrat de polyester en mouvement (200) comprend l'application d'un fluide gazeux chauffé sur la première surface principale de liaison (101) du premier substrat de polyester en mouvement (100).

8. Procédé selon la revendication 1, dans lequel la distribution externe d'énergie thermique sur la première surface principale de liaison (101) du premier substrat de polyester en mouvement (100) et sur la première surface principale de liaison (201) du deuxième substrat de polyester en mouvement (200) comprend l'application d'une première surface (311) d'un extrudat de polyester fondu (312) sur la première surface principale de liaison (101) du premier substrat de polyester en mouvement (100) et d'une deuxième surface (313) de l'extrudat de polyester fondu (312) sur la première surface principale de liaison (201) du deuxième substrat de polyester en mouvement (200).

9. Procédé selon la revendication 1, dans lequel la première surface principale de liaison (101) du premier substrat de polyester en mouvement (100) est une surface quasi-amorphe, exposée à une lampe éclair.

10. Procédé selon la revendication 1, dans lequel la première surface principale de liaison (201) du deuxième substrat de polyester en mouvement (200) est une surface quasi-amorphe, exposée à une lampe éclair.

11. Procédé selon la revendication 1, dans lequel le stratifié de polyester formé (400, 1000) est un article multicouche thermoformable comprenant :
une couche centrale de polyester thermoformable (600) qui est une couche de mousse de polyester avec une masse volumique inférieure à 0,2 g/centimètre cube ;
une première couche superficielle de polyester orientée biaxialement (500) sur le premier côté principal de la couche centrale de polyester (600) ;
et,
une deuxième couche superficielle de polyester orientée biaxialement (500') sur le deuxième côté principal de la couche centrale de polyester (600) ;
dans lequel la couche centrale (600) et la première couche superficielle (500) sont auto-liées l'une à l'autre et dans lequel la couche centrale (600) et la deuxième couche superficielle (500') sont auto-liées l'une à l'autre.

12. Procédé selon la revendication 1, comprenant en outre l'étape de thermoformage du stratifié de polyester formé (400) de sorte que tant le premier substrat de polyester (100) que le deuxième substrat de polyester (200) sont thermoformés.

13. Procédé selon la revendication 1, dans lequel l'entièreté de chacun des premier et deuxième substrats de polyester en mouvement (100, 200) sont chacun des polymères de composition identique.

14. Procédé selon la revendication 1, où le procédé inclut l'étape d'exposition à une lampe éclair au moins de la première surface principale de liaison (101) du premier substrat de polyester en mouvement (100), en ligne avec l'auto-liaison du premier substrat de polyester (100) et du deuxième substrat de polyester (200) l'un à l'autre pour former le stratifié de polyester (400).
